# EUROPEAN PATENT APPLICATION

(11) **EP 4 625 395 A2**
(43) Date of publication of application: **01.10.2025**
(21) Application number: 25196715.4
(22) Date of filing: 12.01.2023
(51) Int. Cl.: G09B 19/00

(54) **DEVICE, SYSTEM AND METHOD FOR PROVIDING A SINGING TEACHING AND/OR VOCAL TRAINING LESSON**

(30) Priority: 13.01.2022 US 202263299037 P
(62) Divisional of application: 23151310.2
(71) Applicant: Simply Ltd, 6701457 Tel Aviv (IL)
(72) Inventor: Livne, Jonathan, Tel Aviv (IL); Malka, Maayan, Tel Aviv (IL); Keshet, Eylon, Tel Aviv (IL); Rosen, Daniel, Tel Aviv (IL); Aharonson, Eran, Tel Aviv (IL)
(74) Representative: IPrime Rentsch Kaelin AG

(57) **Abstract**

Embodiments pertain to systems and methods for providing a singing learning session to a user. The system may be configured to receive an audio signal relating to vocal sounds produced by a user and determine, based on the received audio signal, a vocal range estimate for the user. The system presents the user with musical information in accordance with the determined vocal range estimate. Musical information may for example include musical notations, background music, symbols descriptive of the vowels and/or consonants to be sung by the user.

## Description

### CROSS-REFERENCE TO RELATED APPLICATIONS

This application is a Divisional of European Patent Application EP23151310.2, filed 12 January 2023, and claims priority and/or benefit from US Provisional Patent Application No. 63/299,037, filed on January 13, 2022, titled "DEVICE, SYSTEM AND METHOD FOR PROVIDING A SINGING TEACHING AND/OR VOCAL TRAINING LESSON", the content of which is incorporated herein by reference as if fully set forth herein in its entirety.

### BACKGROUND

Increasing Internet penetration, smartphones and tablets in the modern and emerging economies are boosting the growth of the online music learning market, as an alternative to the traditional personal one-on-one piano lessons. Various online courses and individual lessons that offer enhanced music skills are provided as applications for mobile phones and tablets, typically based on Windows, iOS, Android, and MacOS platforms, are offered by multiple key players, supporting various musical instruments such as guitar, ukulele, piano, vocal, drums, and bass. In addition to the reduced costs, such online music learning provides an interactive and fun experience, while providing more flexibility and being less bound by location and time, compared to personal based tutoring.

### BRIEF DESCRIPTION OF THE DRAWINGS

The figures illustrate generally, by way of example, but not by way of limitation, various embodiments discussed in the present document.

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. References to previously presented elements are implied without necessarily further citing the drawing or description in which they appear. The number of elements shown in the Figures should by no means be construed as limiting and is for illustrative purposes only. The figures are listed below.
**FIG. 1** is a schematic illustration of a singing teaching system, according to some embodiments.
**FIG. 2** is another schematic illustration of a singing teaching system, according to some embodiments.
**FIG. 3** is a flowchart of a method of teaching singing, according to some embodiments.
**FIG. 4** is another flowchart of a method for teaching singing, according to some embodiments.
**FIG. 5A** shows a screenshot of text presented to the user by a display device of the system for determining, based on captured sound of the text read aloud by a user, a fundamental frequency of the user's voice, according to some embodiments.
**FIG. 5B** shows a screenshot of a Graphical User Interface that is actionably engageable by a user allowing the user to provide the system with an input relating to the user's vocal range, according to some embodiments.
**FIG. 6A** shows a screenshot of a Graphical User Interface indicating, based on captured vocal sound, the (e.g., automatic) adjustment of a user's vocal range, according to some embodiments.
**FIG. 6B** shows a Graphical User Interface actionably engageable by a user for adjusting the vocal range without requiring capturing a vocal sound, according to some embodiments..
**FIG. 7A** schematically shows a graphical user interface (e.g., a scale) displaying the user's vocal range.
**FIG. 7B** schematically shows a graphical user interface displaying lyrics using different glyph fonts to assist the user in singing.

### DETAILED DESCRIPTION

The following patent applications are herein incorporated by reference in their entirety:
US Provisional patent application 63/120,434, filed 2 December 2020, titled "Method and Apparatus for an Adaptive and Interactive Teaching of Playing a Musical Instrument";
US Provisional patent application 63/162,823, filed 18 March 2021, titled "Method and System for Music Learning Applications";
US Patent Application 17/388,050, filed July 29, 2021, titled "Method and Apparatus for an Adaptive and Interactive Teaching of Playing a Musical Instrument";
US Patent Application 17/467,224, filed September 5, 2021, titled "Method and Apparatus for an Adaptive and Interactive Teaching of Playing a Musical Instrument";
US Patent Application 17/467,228, filed September 5, 2021, titled "Method and Apparatus for an Adaptive and Interactive Teaching of Playing a Musical Instrument";
US Patent Application 17/529,704, filed November 18, 2021, titled "Method, Device, System and Apparatus for Creating and/or Selecting Exercises for Learning Playing a Music Instrument"; and
US Patent Application 17/561,772, filed December 24, 2021, titled "Crowd-Based Device Configuration Selection of a Music Teaching System".

Aspects of the present invention pertain to a system for vocal teaching and/or coaching, including the teaching of singing, using a computerized devices, systems and/or methods.

Wherever applicable, the term "a user" or "the user" may refer to one or more users, which may be vocalists and/or instrumentalists.

In some embodiments, a computerized system for providing a singing and/or vocal teaching session, is configured to capture vocal output produced by the at least one user (e.g., a vocalist and, optionally, also instrumentalist) and, for example, to determine a level of correspondence estimate between audio inputs generated based on user-generated vocal sounds, captured by sound capturing devices, and desired audio (e.g., vocal) inputs. The system may be configured to provide a feedback relating to the determined level of correspondence estimate. Such feedback can be provided in various ways including, for example, as auditory feedback, visual feedback, and/or haptic (e.g., tactile) feedback.

It is noted that although embodiments discussed herein pertain to audio signals which are created based on vocal-based and/or instrument-based sound and/or audio signals, this should by no means be construed as limiting, as in some examples, MIDI signals may also be provided as input to the system.

Feedback can be provided in various manners including, for example, as auditory feedback, visual feedback, and/or haptic feedback (e.g., via Virtual Reality Displays, Augmented Reality Displays, Mixed Reality Displays). Feedback can for example include information about corrective actions to be undertaken by the user to improve his/her (e.g., verbal and/or non-verbal vocal) performance, and/or the like.

In some embodiments, feedback may relate to the performance of a musical piece, and/or to a plurality of musical pieces performed by the same user. In some examples, the system may include connecting the user to human teacher feedback, or other user feedback (offline passing recordings to a third party, getting feedback from the third party, and optionally passing the feedback to another third party).

In some embodiments, feedback may be provided according to prioritization (e.g., weighting) of performance-related parameter values. For example, pitch, timing, song phoneme pronunciation, breathing, and/or the like, may each be associated with a priority level value (PLV), and the system may provide feedback accordingly.

For example, if providing feedback relating to a first vocal characteristic is prioritized (e.g., weighted) higher than providing feedback to a second vocal characteristic, then the system may initially provide the user with first feedback to correct for deviations from a desired first vocal characteristic, and later provide a second feedback to corrected for deviations from a desired second vocal characteristic. In some examples, the second feedback may only be provided if the user's performance relating to first vocal characteristics exceeds a threshold relating to an accuracy requirement. A first vocal characteristic may for example relate to pitch, and a second vocal characteristic may for example relate to breathing.

In some embodiments, the system may be configured to automatically, or semi-automatically prioritize the feedback to the user, based on the user's performance. For example, the system may detect characteristics relating to the user's performance and prioritize, based on the detected characteristics, the characteristics for which corrective actions should be undertaken. In some embodiments, the prioritization of the feedback may be user-configurable or user-selectable. In some examples, prioritization may be based on earlier indications (e.g., from the user) with regards to specific skills they would like to improve in.

It is noted that the expression "sound information" or "sound" as used herein may refer to acoustic wave energy produced when playing an instrument and/or singing. Some systems and methods may also operate in static mode, in which no background music (BGM) is played, and the user sings at his own pace. In some embodiments, a cursor may be displayed, which advances in accordance with the user's present and/or expected singing pace.

In some embodiments, the user may produce vocal outputs based on musical information relating to (e.g., descriptive of) a desired series of musical sounds to be produced by the user. Musical information may pertain to songs, or parts of songs.

In some embodiments, musical information may be presented to the user while not in conjunction with any backing song or tune, with the user being prompted to make some vocalizations at their own pace or timing in accordance with some desired input. This may be used in giving the user a singing learning session and feedback on their performance with regards to some specific singing skills (e.g., hitting a correct pitch, singing in a correct loudness level, making correct pronunciations, using correct voice type) as separate from the correspondence of their performance to any particular musical piece.

Musical information may be presented to the user in many ways including, for example, as visually, auditory, tactile, haptic, through a virtual reality presentation, and/or through an augmented reality presentation. In some examples, system may allow generating different user-profiles and associate different musical information to each profile depending, for example, on gender, age, gender, musical preferences, characteristics of the user's voice (e.g., vocal range), singing skill level, and/or the like.

In some embodiments, musical information may include instructions provided to the user in form of and/or relating to the utterance of, for example, certain vowels or consonants, syllables, or words (e.g., lyrics) of a musical piece, musical notations (e.g., notes, tabs), auditory cues (e.g., recorded and/or virtual synthetic vocal and/or instrumental) cues, BGM presented to the user by the system, instructions relating to breathing (breathing pattern, inhalation/exhalation timing, breathing exercises), phrasing-relating instructions (e.g., suggested singing length of consonants and/or vowels), and/or diction-related instructions (e.g., mouth shape, tongue placement, enunciation, pronunciation), lower or softer singing, and/or discarding information to train or accustom the singer or vocalist to sing by heart. In some examples, the musical information may be generated by the system and presented to the user via the computerized device. In some examples, the musical reference information may be based on instrument outputs generated by other users of the system.

The term "utterance" as used herein may include singing, yodeling, scatting/scat singing, beatboxing, vocalizations, lilting, whistling, and/or other verbal or non-verbal vocal performance. The system may be configured to feedback as to the level of correspondence between the sound of a real instrument the user is mimicking, and the sound produced by the user (e.g., with respect to a "beatboxing" performance of the user).

It is noted that the presentation of musical information such as, for example, BGM, lyrics, and/or the like is entirely optional, and the user or users may sing A-Cappella. The a-cappella produced vocal sounds may be captured and analyzed by the system, for example, to provide adapted exercises and/or suggest alternative songs and/or styles at different levels and/or scale transpositions.

It is noted embodiments discussed herein with respect to user-selections and/or user-configuration, may also include third-party user user-selections and/or configurations. For example, not only a user performing musical notations may be operable to make selections, configurations, set preferences, and/or the like, but also another "third-party" user (e.g., another performer and/or teacher) may suggest and/or define selections, configurations and/or preferences. Such other user may set configurations, etc., from remote, by logging into a session and/or a profile of the first user, e.g., subject to the first user's authorization. In some examples, cues may include visual, tactile, and/or auditory cues or indicators provided in association with musical notations to provide the user with timing information when to sing a certain musical note or series of musical notes, in accordance with the speed or pace of a musical piece, usually marked with tempo markings. Such indicators may for example include different glyph fonts to assist the user in singing (e.g., the underlining of musical notations, change in colors of musical notations, change in size of musical notations), the output of sounds, haptic and/or tactile outputs, provided to the user in timed coordination with notes of a musical piece to be sung and/or otherwise performed by the user. Markings may also assist in producing by the vocalist a poly-rhythmic feel. In some examples, tempo indications may change over the course of displaying sing-along information for a same song.

In some embodiments, the system may automatically determine (e.g., select) the musical information for presentation to the user. In some embodiments, the musical information presentation may be automatically and/or semi-automatically seamlessly or substantially seamlessly adaptable "on-the-fly", e.g., while the user is singing and/or otherwise vocally and/or instrumentally performing a certain musical piece in accordance with the presented musical information. For example, first musical information of a musical piece may be seamlessly adapted into second, adapted, musical information of the same musical piece, to allow continued performance of the musical piece by the user in accordance with the adapted musical information. Hence, a remaining part of the musical piece may performed without interruption despite the updating of the musical notation information.

In some embodiments, seamless adaptation of musical information presented to the user may be executed based on a level of correspondence estimate between (e.g., vocal-based) input signals, and desired (e.g., vocal-based) input signals, and/or other user-generated audio signals.

In some embodiments, seamless adaptation of musical information may be accompanied with corresponding cues to provide the user with advance information (e.g., advance indicators) about upcoming changes in the musical information about to be presented to the user for a musical piece while the user is performing the musical piece. The cues may be in the form of visual and/or auditory cues, and may relate to transposition, modulation of initial musical information into adapted musical information representing a change in key, a change in the BGM, a change in beats- per-minutes (BPM), change in the rhythmic signature, and/or the like.

In some examples, (e.g., seamless) adaption of musical information may result in the presentation of a more simplified version of the musical information relative to the initial musical information, or in the presentation of musical information at higher complexity than the initial musical information.

In some examples, (e.g., seamless) adaption (e.g., modulation, transposition) of the initial musical information presented to the user in a first key into a second key different from the first key may be performed based on detection of changes in parameter values relating to vocal characteristics (e.g., increased vocal strain). In some examples, vocal strain may relate to an increased number of errors (e.g., deviations from a desired pitch and/or other criterion) made (e.g., sung) by the user within a certain period. For example, if the number of errors exceeds a strain-related or error threshold, the system may determine (e.g., classify) that the user's voice is "strained", and provide appropriate feedback (e.g., instructions) to the user. A change in key may be performed so that most or all musical notations fall within the initial or an adapted detected vocal range, or may be changed to allow the user exercising singing in an increased vocal range.

In some examples, (e.g., seamless) adaptation of musical information may include shifting presentation of one or more notes by an octave (up or down) for adjusting the musical representation to the user's new vocal range, e.g., without changing the key in which the musical notations are presented to the user, or for allowing the user to exercise singing in an increased vocal range.

In some embodiments, the user may select the musical information to be presented by the system and which not. In some embodiments, the system may present the user with various user-selectable musical information configurations. In some embodiments, musical information presentation configurations may be user-configurable "on-the-fly", e.g., while the user is singing along a certain musical piece.

In some embodiments, incomplete or partial musical information may be provided as to facilitate and/or encourage memorizing missing parts in relation to the incomplete musical information. For instance, the singer may be provided with incomplete lyrics and/or musical notations including a first missing part to help memorizing the first missing part. For example, the missing part may pertain lyrics and/or melody of a song, respectively, to be performed by the user. In some examples, the system may automatically, randomly, pseudo-randomly, adaptively or dynamically, discard or remove parts of musical information. In some examples, in the event the system detects or determines that the user has memorized the first missing part, the system may additionally discard a second part such that updated incomplete musical information is missing both the first and the second part, etc.

In some examples, the system may automatically adjust (e.g., adaptively or dynamically) the presentation of musical ianformation to the user. For instance, the system may provide the user with less musical cues as the number of errors made by the singer decrease. Conversely, the system may provide the user with more musical cues, as the number of errors made by the user increases.

In some embodiments, complementary musical information may be provided to the user, e.g., adaptively, dynamically, randomly and/or pseudo-randomly, for instance, to facilitate and/or encourage completing a certain performance task such as singing a song. For instance, the singer may be provided with complementary lyrics, sounds or sound cues (e.g., recorded and/or synthetic vocal outputs, reference sounds such as reference vocals and/or other cues) and/or musical notations to assist in completing a performance in relation to a song. In some examples, the system may randomly or pseudo-randomly present musical information. In some examples, the system may automatically add (e.g., adaptively or dynamically, randomly or pseudo-randomly) complementary musical information to the user. For instance, the system may provide the user with additional musical cues as the number of errors made by the singer increase. Conversely, the system may provide the user with fewer musical cues, as the number of errors made by the user decreases.

In some examples, the system may automatically adjust (e.g., adaptively or dynamically) the presentation of musical information to the user, depending on the level of the user and/or a level of complexity associated with a musical piece or parts thereof.

For instance, the system may provide the user with fewer musical cues, as the number of errors made by the singer decrease and/or present the user with a musical part having increased or higher complexity relative to an initial complexity level. Conversely, the system may provide the user with more musical cues, as the number of errors made by the user increases and/or present the user a musical part with decreased or lower complexity compared to the initial complexity level.

In some embodiments, a "hybrid" updating approach of musical information presentation may be employed, where at least one first aspect or characteristic relating to musical notations of a musical piece (e.g., temporal frequency of displayed notes within a bar) may be presented to the user at higher complexity relative to an initial complexity level of the at least one first aspect, while at the same time, at least one second aspect or characteristic different from the first aspect (e.g., lyrics) relating to the musical notations of the same musical piece may be presented to the user at lower complexity, relative to the initial complexity level of the at least one second aspect. The hybrid updating approach may be employed between sessions, or during a performance of musical piece "on the fly" or seamlessly.

In some embodiments, for a singer with an associated lower singing error rate, the system may provide the user with more musical notations to be sung within a certain time period. Conversely, for a singer with an associated higher singing error rate, the system may provide the user with less musical notations to be sung within a certain time period, compared to the number of musical notations presented to the singer with the associated lower singing error rate. The number of musical notations to be performed by the user may be adapted by changing the beat and/or by changing the number of musical notations to be performed (e.g., sung) for a same musical piece having a given number of bars.

In some embodiments, the system may be configured to receive or determine a user's vocal range estimate. For example, a fundamental frequency or pitch estimate may be determined for a user, e.g., based on text read by the user; musical sounds sung by the user; and/or the like. Based on the determined fundamental pitch estimate, the system may determine the user's vocal range estimate.

The text may be any text that is read by the user and captured by the system, and/or a text that is presented by the device for reading by the user. The system may present the user with musical information (e.g., list of songs) based on the user's vocal range and, for example, based on other parameters such as, for example, age, gender, and/or musical preferences. Musical information may be determined (e.g., selected) by the system and presented in a scale that suits the user's vocal range.

In some embodiments, based on audio signals relating to captured vocal sounds produced by the user, the system may determine whether a current scale suits the user's vocal range or not. The system may automatically adapt or suggest adapting (e.g., transposing) current musical information, based on detected characteristics which are indicative that the current scale does not suit the user's vocal range.

In some embodiments, vocal range information may be received by the system via a corresponding vocal range indicator actionably engageable by the user using, for example, a sliding scale, presented to the user.

In some embodiments, the sliding scale may allow the user to provide the system with a feedback (e.g., qualitative and/or quantitative feedback) regarding the user's level of comfort to produce (e.g., sing) a vocal sound at a certain pitch.

In some examples, in addition to determining for the user, based on an initial vocal user input, a current vocal range having a current upper and/or lower vocal range limit, the system may be also be operable to determine an estimate of possible vocal range extensions exceeding the current upper and/or lower vocal range limit of the user. The vocal range extensions may be presented to the user, optionally along with a set of exercises for increasing the current vocal range to a desired extended vocal range.

In some examples, the musical sounds may be sung based on singing instructions presented to the user by the system. Singing instructions can include, for example, notes, reference sounds presented to be sung by the user, and/or the like.

In some examples, based on vocal input provided by the user, the system may be operable to provide the user with personalized vocal warm-up exercises. In some examples, the system may be configured to identify vocal characteristics indicative of increased or decreased strain (e.g., hoarseness, voice change such as weakened voice, laryngitis, sore throat, and/or the like), and provide the user with corresponding feedback including, for example, vocal (warm-up) exercises, imposing breaks between singing sessions, and/or the like. In some examples, for a selected user-profile, the system may associate breaks of a certain minimum period, based on the vocal input provided by the user.

In some embodiments, the system may associate the voice of a first user with a selected user-profile. In some examples, the system may be configured to detect if a second user that is different from the first user is trying to vocally perform musical information associated with the profile associated with the first user. In such scenario, the system may disable the displaying of the musical information associated with the first-user profile to the second user. This way, overriding of information associated with the first-user profile by the second user can be prevented. In a further example, a first user that is associated with an imposed singing break is prevented from overriding the safety health measures through access of a second user profile, which is associated with a different voice profile.

In some examples, the system may be configured to detect attempts of associating same voices to different user profiles, and allow for preventing such attempts.

In some embodiments, the system may be configured to provide the user with musical information relating to instructions for producing musical sounds using one or more vocal registers. Vocal registers may for instance be defined as whistle, falsetto, modal, and/or vocal fry.

In some embodiments, the system may allow the user to select a vocal range, piece of music, performance level, styles, and/or the like, e.g., from a set of available musical pieces, performance (e.g., singing) levels and/or styles.

In some embodiments, musical pieces may be presented to the user in accordance with the vocal range estimate associated with (e.g., determined for) each user.

The musical information (e.g., BGM) provided by the system in accordance with the selection made may then be played through one or more speaker output devices. Non-limiting examples of sound output devices may include speakers, external speakers, headphones, and/or even via embedded speakers of another computerized and/or computing device.

The user can sing along with the provided musical information, which provides the user with an improved music experience. The sound generated by the user singing may herein also be referred to as "user-generated sound". The user-generated sound combined with, for example, the BGM, sound generated by other users playing an instrument and/or signing, and/or environment noises, may herein be referred to as "composite sound".

In some embodiments, vocal sounds produced by the user may be captured by one or more microphones (as an example of a non-inertial sensor) to generate audio inputs for analysis by the system.

In some embodiments, the analysis may include determining a level of correspondence estimate between the received vocal audio inputs and desired vocal audio inputs and, optionally, providing a feedback relating to the determined level of correspondence estimate.

In some embodiments, the feedback may be indicative of the singer's performance including, for example, errors, suggesting a desired higher or lower signing level, and/or the like. In some embodiments, the feedback may include a recommendation regarding use of a different scale for singing a particular musical piece, and/or the like.

In some embodiments, at least one first user (e.g., vocalist and/or instrumentalist) may be presented with a synthesized sound output that is generated based on the processing of audio signals of an actual playing and/or singing performance of at least one second user (e.g., vocalist and/or instrumentalist), different from the first user. The synthesized playing and/or singing output presented to the at least one first user is corrected for playing and/or singing errors that may be made by the at least one second user.

In some embodiments, crowd-sourced content of the at least one second user may be presented as synthesized output to the at least one first user.

In some embodiments, the synthesized playing and/or singing output created based on the at least one second user may be generated in real-time or substantially in real-time with respect to the actual instrument playing and/or singing output of the at least second user collaborating with the at least one first user.

In some examples, output produced by at least one first user may be processed to produce synthesized output, which may correct for off-key performance of the at least one user and is therefore provided in the correct pitch. Additional or alternative adaptions of the generated synthesized input with respect to the original input may pertain to loudness, effects (hall), background noise filtering, and/or the like. For example, in a scenario where two or more users are concurrently and/or collaboratively singing, deviations from a desired pitch (also: off-key singing and/or instrument playing) of the at least one second user are not presented to the at least one first user, and vice versa. Instead, synthesized corrected version of the performance of the at least one second user is presented to the at least one first user and vice versa. This way, off-key performance of at least one second user does not interfere with the performance (e.g., singing and/or instrument playing) of the at least one first user, and vice versa.

In some embodiments, feedback may be provided with respect to the joined performance of at least one instrumentalist and of the vocal performance of at least one vocalist.

It is noted that all discussions herein with respect to vocal inputs input by a single user to the system, and corresponding feedback provided by the system to the single user, are also analogously applicable with respect to vocal input collaboratively produced and provided by a plurality of users, and to the feedback that is output by the system based on the received collaborative vocal input. In some examples, all users may be collocated using a same device or different devices, and in some other examples, at least two users of the group performing jointly may be located at different locations, remotely from each other, using different devices.

Collaborative playing may be performed in conjunction with the employment of various music teaching apps, such as SimplyPiano^{™}, SimplyGuitar^{™}, and/or the like. For example, a first user may use a vocal teaching and/or vocal training app (e.g., SimplySing^{™}), the same user and/or other users may employ use other apps such as SimplyPiano^{™} and/or SimplyGuitar^{™} to assist in collaborative performing. The system may be configured such that each user is presented in timed coordination with corresponding musical information to be performed such to allow for collaborative performance of respective roles or parts (e.g., vocal part, guitar part, piano part) of a same musical piece.

A group of users may for example form an acapella group, a choir, background vocals to a lead singer and/or lead instrumentalist, and the user may detect vocal characteristics relating to the collaborative vocal sound produced and provide related feedback relating the joined performance, with respect to pitch, pronunciation, etc. The joined performance may be in monophony, or in polyphony.

In some embodiments, the system may be operable to detect the individual voices of the plurality of voices of a collaborative vocal input provided to the system (e.g., by performing spatial signal separation), and provide feedback with respect to each individual voice.

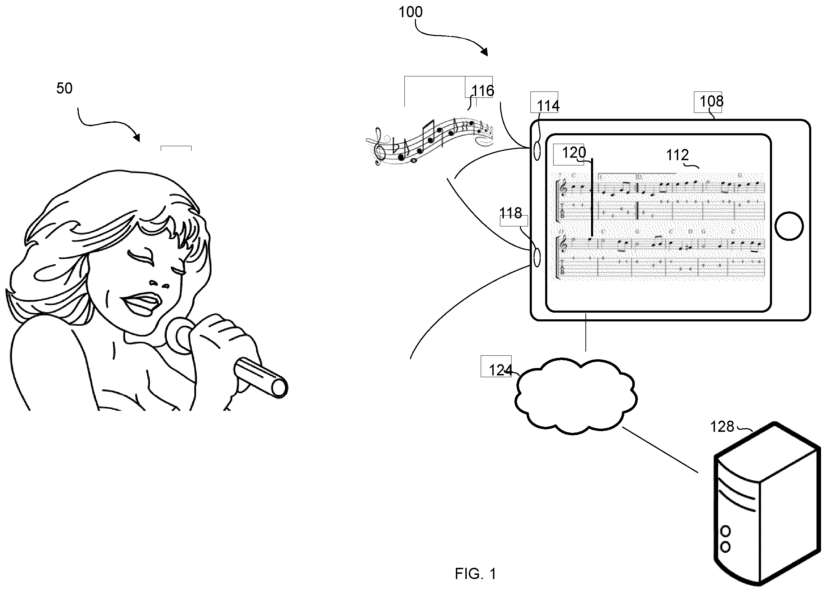

Reference is now made to **FIG. 1****.** A user **50** who wishes to receive a singing teaching lesson, may activate an application of a system **100.** The application may be installed on or executed by device **108.** Device **108** may be, for example, a tablet computer, smart phone, a mobile phone, a desktop computer, a laptop computer, a smartwatch device, and/or the like. User **50** may select a song or another piece to learn and, optionally a difficulty level or player level.

User **50** may then be provided with musical information (e.g., singing instructions) such as, for example, one or more notes, syllable(s) and/or lyrics **112** of the selected piece and, optionally, sound **116** containing BGM for a selected piece, which may be played through one or more speakers of device **108** such as speaker **114,** and/or another device such as earphones, external speaker, or the like. Musical information may also include singing instructions relating to expression and/or tempo. In some embodiments, musical information may also relate to sounds produced or expected to be produced by collaborating users, e.g., jamming with user **50.** As the BGM is played, a cursor **120** may be displayed, showing user **50** for example, a current note, syllable(s) and/or lyric(s) to be sung.

Audio-data or audio signals may be received by the system **100** and analyzed thereby. The received audio signals may pertain to the user's singing and, optionally to additional captured sound, such as environmental noises and/or to vocal sounds or produced by other users; and/or to audio signals relating to an instrument played by the singer and/or by other users of the system.

Received audio signals may relate to audio signals generated by an electronic instrument played by the singer and/or to sound produced by user **50,** and/or other sounds produced by other sources, captured by one or more microphones of device **108** such as microphone **118** and/or external microphones. In some examples, audio signals relating to instruments played by other users may be processed by the system.

In some embodiments, device **108** may execute a computerized application including, for example, providing a BGM output, and/or performing analysis of the user's playing.

In some embodiments, the application may be a client application, communicating with a corresponding server application.

In some embodiments, device **108** may be in wired or wireless communication with server **128,** through channel **124,** such as the Internet, intranet, LAN, WAN, 5G, or the like.

In some embodiments, parts of the functionalities of the application may be performed, respectively, by a client application, a server application, or a combination thereof.

It will be appreciated that if further users are collaboratively singing and/or playing with user **50,** device **108** may be connected to a server or to another client application to communicate with the device used by the other user(s).

When user **50** has finished singing, user **50** may be presented with the analysis results, comprising for example singing errors, feedback concerning progress made, feedback concerning progress and/or errors made relative to peers, performance accuracy, performance scores, vocal coaching techniques, general comments, music type or level change recommendations, or the like.

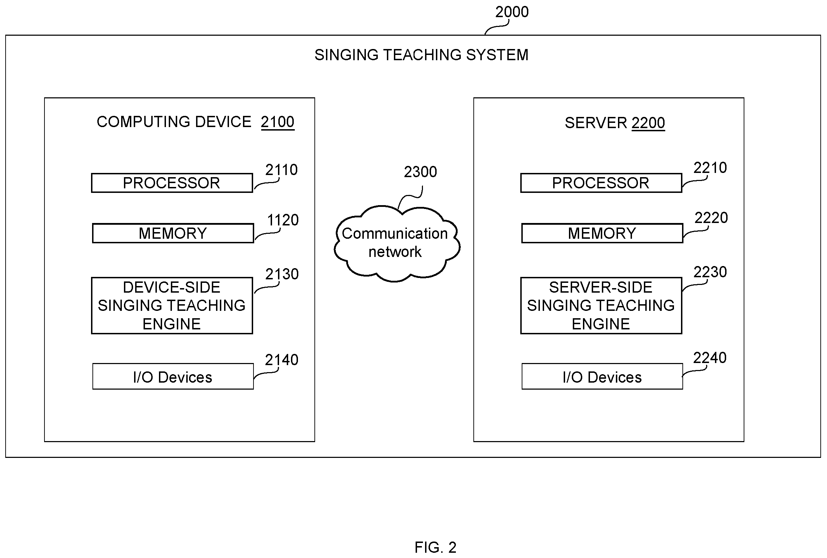

Reference is now made to **Fig. 2****.** In some embodiments, a system **2000** for teaching playing an instrument and/or the teaching of singing, may comprise a computing device **2100** and a server **2200.**

Computing device **2100** may comprise one or more processors **2110** and one or more memories **2120.** Any of processors **2110** may be a Central Processing Unit (CPU), a microprocessor, an electronic circuit, an Integrated Circuit (IC) or the like. Processors **2110** may be utilized to perform computations required by system **2000** and/or any of its subcomponents.

System **2000** may further comprise one or more Input/Output devices **2140** and, optionally, Input/Output ports, which may be connected to one or more the Input/Output devices **2140.**

Similarly, server **2200** may include a processor **2210,** a memory **2220.** Executing of computer-executable instructions stored in memory **2220** by processor **2210** may result in a server-side singing teaching engine **2230.** Server **2200** may further include input/output devices **2240.**

The term "processor", as used herein, may additionally or alternatively refer to a controller. Processor **2110** and/or processor **2210** may be implemented by various types of processor devices and/or processor architectures including, for example, embedded processors, communication processors, graphics processing unit (GPU)-accelerated computing, soft-core processors and/or general purpose processors.

Memory **2120** and/or memory **2220** may comprise data and algorithm code which, when executed by processor **2110,** results in a singing teaching engine or application **2130,** e.g., as outlined herein.

Memory **2120** and/or memory **2220** may be implemented by various types of memories, including transactional memory and/or long-term storage memory facilities and may function as file storage, document storage, program storage, or as a working memory. The latter may for example be in the form of a static random access memory (SRAM), dynamic random access memory (DRAM), read-only memory (ROM), cache and/or flash memory. As working memory, Memory **2120** and/or memory **2220** may, for example, include, e.g., temporally-based and/or non-temporally based instructions. As long-term memory, Memory **2120** and/or memory **2220** may for example include a volatile or non-volatile computer storage medium, a hard disk drive, a solid state drive, a magnetic storage medium, a flash memory and/or other storage facility. A hardware memory facility may for example store a fixed information set (e.g., software code) including, but not limited to, a file, program, application, source code, object code, data, and/or the like.

Input/output devices **2140** and/or **2240** may include a display device, one or more microphones, one or more speakers, inertial sensors, non-inertial sensors, sensors configured to sense physiological parameter characteristics (e.g., blood pressure, pulse, sweat rate, body temperature, user motion, movement), microphones, wearable sensors, non-wearable sensors, image or imaging sensors, and/or a communication module for communicating, for example, with a server comprising a database storing music pieces and arrangements, and/or the like.

Input devices are configured to convert human-generated signal, such as, human voice, physical movement, physical touch or pressure, sensed physiological parameter characteristics, and/or the like, into electrical signals as input data into system **2000.** Output devices may convert electrical signals received from computing system **2000** into signals that may be sensed as output by a human, such as sound, light and/or touch.

Input devices of I/O devices **2140** and/or **2240** may for example include inertial and/or non-inertial sensors such as cameras, linear acceleration sensors, angular acceleration sensors, gyroscopes, satellite-based navigation systems (e.g., the US-based Global Positioning System), microphones, direction and selection control devices (e.g., joystick, a trackball, a mouse), gravitational sensors, a touch sensitive screen.

An input device may be operable to receive a signal relating to the utterance of one or more of the following: certain vowels or consonants, syllables, or words (e.g., lyrics) of a musical piece, a vocal training exercise, musical notations (e.g., notes, tabs), auditory cues (e.g., recorded and/or virtual synthetic vocal and/or instrumental) cues presented to the user, BGM presented to the user by the system, inputs relating to breathing (detection of breathing pattern, inhalation/exhalation timing, breathing exercises), phrasing-relating inputs (e.g., detection of singing length of consonants and/or vowels), and/or diction-related inputs (e.g., mouth shape, tongue placement, enunciation, pronunciation), lower or softer singing, user posture, user motion (e.g., gestures, limb motions, posture changes such as sitting down or standing up), and/or the like.

For example, inertial sensors and/or cameras may be employed to sense a physical characteristic relating to the user's posture, user's motion, physiological signals, (e.g., heart rate), while singing and/or performing, to generate a signal relating to the sensed (e.g., physical) characteristic for further processing and, e.g., for providing feedback based on the sensed physical characteristics. In some examples, environmental characteristics may be also sensed and processed and taken into consideration when providing feedback to the user. Such environmental characteristics may be pertain to ambient temperature, air humidity, and/or the like.

The term "motion" as used in this application refers to the motion of the body and/or of body parts without displacement of the whole body as a bulk, such as gestures, limb motions, posture changes such as sitting down or standing up, gait (separated from the displacement), motion suddenness (e.g., possible fall or collapse) etc.

The term "movement" as used in this application refers to the displacement of a person's body as a whole, irrespective of the motion of body parts such as the limbs.

It is noted that, in some embodiments, any vocal or other performance characteristic may be monitored with respect to a desired range, and corrective feedback may be provided if the monitored characteristic exceeds from the desired range for a certain time period.

Output devices of I/O devices **2140** and/or **2240** may include a display, a touch-sensitive display, a speaker, a tactile output device, a haptic output device. In some examples, the input device and the output device may be the same device, e.g., in the case of a touchscreen.

An output device may be employed to provide the user with feedback based on an input provided by the user to perform in accordance with musical information (e.g., notations) presented to them.

Feedback that may be provided may include qualitative, quantitative feedback, and/or corrective feedback. For example, based on sensed physiological parameter values (e.g., blood pressure, pulse, sweat rate, body temperature, user motion, user movement, user posture), the system may be configured to determine a level of stress of a user while performing or after performing a certain musical piece, and provide the user with corresponding feedback, e.g., breathing exercises, and/or updated musical notation information, e.g., "on-the-fly" or in association with a selected new musical piece, e.g., if the determined level of stress exceeds a stress-related threshold value.

For example, feedback may be provided in the form of corrective instructions to the user how to utter certain vowels or consonants, syllables, or words (e.g., lyrics) of a musical piece, corrective instructions relating to breathing (breathing pattern, inhalation/exhalation timing, breathing exercises), phrasing-relating instructions (e.g., suggested singing length of consonants and/or vowels), and/or diction-related instructions (e.g., mouth shape, tongue placement, enunciation, pronunciation), lower or softer singing, corrective posture and/or corrective motion instructions, corrective movement instructions, and/or the like.

The components detailed below may be implemented as one or more sets of interrelated computer instructions, executed for example by any of processors **2110** and/or processors **2210.** In some embodiments, some of the components may be executed by one computing device while others may be executed by another computing platform such as server **2200.** The components may be arranged as one or more executable files, dynamic libraries, static libraries, methods, functions, services, or the like, programmed in any programming language and under any computing environment.

A communication module of I/O devices **2140** and/or **2240** may be configured to enable wired and/or wireless communication between the various components and/or modules of the system and which may communicate with each other over one or more communication buses (not shown), signal lines (not shown) and/or a network **2300.**

Network **2300** may be configured for using one or more communication formats, protocols and/or technologies such as, for example, to internet communication, optical or RF communication, telephony-based communication technologies and/or the like. In some examples, the communication module may include I/O device drivers (not shown) and network interface drivers (not shown) for enabling the transmission and/or reception of data over network **2300.** A device driver may for example, interface with a keypad or to a USB port. A network interface driver may for example execute protocols for the Internet, or an Intranet, Wide Area Network (WAN), Local Area Network (LAN) employing, e.g., Wireless Local Area Network (WLAN)), Metropolitan Area Network (MAN), Personal Area Network (PAN), extranet, 2G, 3G, 3.5G, 4G, 5G, 6G mobile networks, 3GPP, LTE, LTE advanced, Bluetooth^{®} (e.g., Bluetooth smart), ZigBee^{™}, near-field communication (NFC) and/or any other current or future communication network, standard, and/or system.

The teaching engine (implemented, for example, by device-side teaching engine **2130** and/or server-side teaching engine **2230**) may be configured to implement steps, processes, and/or methods as described herein.

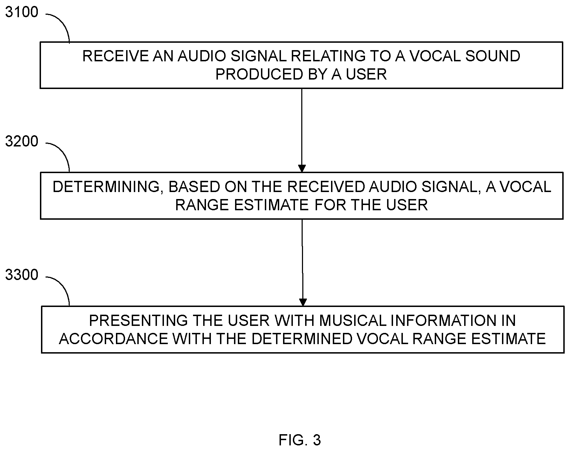

Reference is now made to **FIG. 3****.** In some embodiments, a method of providing a singing learning session to a user may include, for example, receiving an audio signal relating to a vocal sound produced by a user (block **3100**).

In some embodiments, the method may further include determining, based on the received audio signal, a vocal range estimate for the user (block **3200**).

In some embodiments, the method may include presenting the user with musical information in accordance with the determined vocal range estimate (block **3300**).

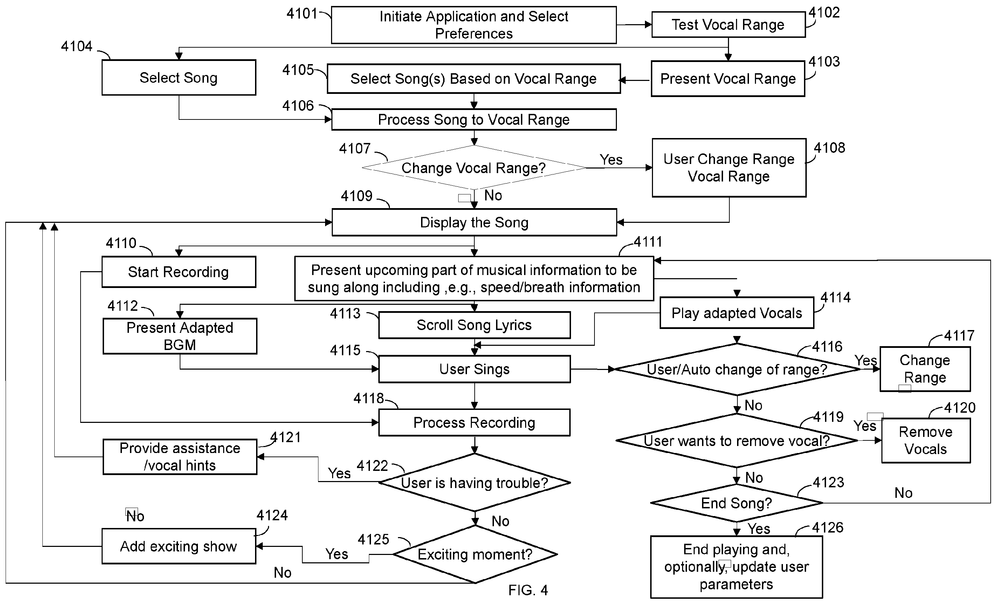

Additional reference is made to **FIG. 4****.** In embodiments, as indicated by block **4101,** the method may include initiating the application or system by the user (singer). Initiating the application may include the loading and/or selecting of user preferences.

In some embodiments, the preferences may be any one or more of the following: predetermined preferences, general preferences, previously stored user preferences, and/or parameters values determined by the application. Preferences may include, for example, user's voice range, preferred genre, age, preferred music genres, song the users sang before, device hardware and/or software configurations. Preferences or configurations may in some examples be crowdsources. In some examples, initialization may be executed the first time the user uses the system, or per user request. In some examples, subsequent application initialization may include loading of previously determined or selected parameters values relating to user preferences and/or device configuration.

As indicated by block **4102** and block **4103,** the method may include determining a voice range estimate for the user. Song selection, song scale and/or other musical information may be presented by the application to the user based on the determined voice range estimate.

In some examples, determining a user's a vocal range estimate may performed based on capturing the user's speaking into a microphone. The user may speak anything he wants, or read a text presented by the application to the user, for determining a fundamental base frequency of the user's voice.

In some examples, determining a user's a vocal range estimate may be performed by providing with the user with singing instructions, capturing the singing sound produced by the user, and determine, based on the captured sound produced by the user's, the user's vocal range. The singing instructions presented to the user can relate one or more of the following: instructions to sing at a pitch in accordance with the pitch of a tone produced by the application to determine a fundamental frequency of the user's voice (e.g., by comparing the vocal sound produced by the user with the pitch of the tone produced by the application); providing instructions to sing a song or part of a song in any desired scale the user is comfortable with and analyze the captured singing sound. The vocal range estimate determined for a user may be saved for the current and subsequent singing teaching or coaching sessions. In some examples, the vocal range estimate may be automatically updated by the application, as the user's singing capabilities change (e.g., improve) over time.

In some examples, the application may provide the user with information regarding their voice range. Voice range information may be descriptive, e.g., "Bass", "Tenor", "Soprano", or as mathematical expressions in frequencies.

As indicated by block **4104,** the method may include, for example, letting the user select any song.

As indicated by block **4105**, the method may include presenting the user with songs in a scale and/or have pitch range that matches the user's determined voice range estimate.

As indicated by block **4106,** the method may include processing data descriptive of musical pieces in accordance with the determined vocal range estimate of the user.

In some examples, the processing of musical pieces data may include performing a transposition in accordance with the determined vocal range estimate.

In some examples, the processing may include shifting a frequency domain of the song to match the user vocal range, for instance, by employing a constant shift or via a transfer function to a new domain of frequencies.

In some examples, the processing may include disabling the displaying or rearranging some of the musical information presented to the user to prevent providing singing instructions that exceed that user's vocal range estimate. For example, musical notation may be less detailed to indicate skipping of comparatively higher or lower-pitched tones, and/or otherwise changing the complexity of the musical arrangement presented to the user in accordance to their past and current performances, skill level, error rate, and the difficulty of the original musical piece.

Additional or alternative musical adaptions may pertain to changes in lyrics, replacement of at least some of the lyrics into vocalizations for simplification, or vice versa, for increased complexity, and/or otherwise changing the complexity of the musical arrangement presented to the user in accordance to their past and current performances, skill level, error rate, and the difficulty of the original or initial musical piece.

It is noted that the term "original", "initial" may not necessarily to first information presented to a user in a series of musical information, but may pertain musical information that sequentially precedes other (e.g., updated) information presented to the user.

It is noted that any adaption described herein to musical notation, whether on-the-fly or not, during the singing of a musical piece by the user, or not, may pertain to adaptation for the purpose of increasing complexity and/or difficulty, or for decreasing complexity and/or difficulty, with respect to a user's acquired vocal performance that is compared against a desired performance. It is noted that as a reference, a "desired performance" may relate to reference predetermined performance parameter values stored in the system, and/or to performance parameter values of a previous performance by the user ("self-reference" or "self-comparison"). In some embodiments, the reference performance parameter values may be adaptively updated in a personalized manner with respect to the performance (e.g., capabilities, progress made) by each user. In some examples, as indicated by block **4107,** the method may include presenting the user with updated musical information that corresponds to an alternative voice range for singing along. For example, the user may practice singing along parts of the updated musical information, e.g., for checking whether the alternative voice range satisfies the user's objective and subjective perception concerning comfort and success.

In some examples, as indicated by block **4108,** the method may include receiving, from the user, an input indicative of the user's vocal range. For example, the user may actionably engage with symbols presented by the application (e.g., sliding bars or scales) for setting a preferred low pitch and high pitch.

As indicated by block **4109,** the method may include presenting the user with musical information. Musical information may comprise full or partial (also: incomplete) lyrics of a song, and/or full or incomplete musical notations, optionally along with contextual symbols (e.g., location indicators) to assist the user in singing a song.

In some examples, contextual symbols and/or change in symbol may relate, for example, to duration and/or pitch of a word to be sung. For example, in the Beatles song "Yesterday", the lyrics "yesterday all my troubles seemed so far **away**" the underlining and bold indicates that the word "away" should be sung longer than the previous word(s). In another example, the underlining of a word in a Rap song may indicate that the said word should be uttered within a shorter time period.

In some examples, symbols may pertain to breathing instructions such as, for instance, where to take a "deep breath" before along breathless singing part, loudness, dynamics, head-voice singing instructions, chest-voice singing instructions, mixed chest/head voice instructions, vibrato, pitch change-rate, timing, timbre, pronouncing lyrics and how to produce song phonemes correctly, and/or the like.

In some examples, symbols may pertain to the timing of uttering a vowel, consonant or word.

In some examples, once the application detects sing-along vocal sounds produced by the user, the application may present the user with musical information about the next singing part (subword / words / sentence / paragraph) and possibly highlighting where to sing (current song position).

As indicated by blocks **4110,** the method may include the recording singing sounds generated by the user. The method may also include capturing images and/or other sensor data relating to the user's singing performance, including the user's facial expressions, breathing pattern, user's posture, user movement, user motion, e.g., by employing imaging sensors, and/or inertial sensors (e.g., embedded in the mobile device and/or worn by the user). The captured sensor data may be processed to analyze the user's way of singing and to provide related feedback concerning, e.g., updated breathing instructions, loudness, dynamics, head-voice singing instructions, chest-voice singing instructions, mixed head/chest-voice singing instruction, vibrato timing, pitch, pitch change-rate, timing, timbre, pronouncing lyrics, how to correctly pronounce song phonemes, personalized exercises, and/or performance scores.

In some embodiments, as indicated by block **4111,** the method may include presenting the user with upcoming musical information to be song along by the user. Such upcoming musical information may include indications relating to, for example, upcoming lyrics and/or musical notations presented, e.g., by highlighting consonants, vowels to be sung now, indication such as the change of speed of singing (slower, faster), breathing related recommendations (e.g., when to inhale and/or exhale).

In some embodiments, as indicated by block **4112** the method may include adapting, by the system, configurations in relation to BGM presented to the user. BGM may be adapted, for example, based on analyzing audio signal relating to captured singing performance of the user, user preferences and/or preferences. For example, for a same song or for different songs, different BGM styles may be output based on the user's personal preferences (e.g., pop rhythm, swing, Latin rhythm), with or without chord comping, pop chord comping, jazz chord comping, with less or with more instruments playing in the background, and/or the like. In some examples, the user may select which instrument to be included or excluded in the BGM. In some examples, the user may select that no BGM is to be provided.

In some examples, as indicated by block **4113,** the method may adapt configurations relating to vowels, consonants words and/or lyrics presented to the user for singing. For example, instructions may pertain to phonetics instructions, to the singing of at least one vowel, at least one consonant, at least one blend of vowels (e.g., vowel diagraph), at least one blend of consonants (consonant diagraph), at least one vowel teams, and/or at least one phoneme. Instructions may indicate what to sing at what timing. For example, instructions may include scrolling song lyrics in accordance with the desired sing-along pace with a song and indicate (visually, auditorily, tactile and/or haptically) the timing a certain phonetic of a lyric is to be sung. Visual indicators can include change in color of symbology display to the user, highlighting, and/or a pointer (e.g., cursor).

In some embodiments, as indicated by block **4114,** the method may include outputting accompanying recorded vocals and/or synthetic vocals and/or playing back processed capture vocal sound. Processing captured vocal sound produced by the user may include, for example, pitch adjustment to correct for deviations from a desired pitch, adding effects to the captured vocal sound and playing back the processed vocal sound. Such effects can relate, for example, to reverb, delay, choir, hall, vocoder, vibrato, high pass filter, and/or low pass filter. In some examples, the method may include suggesting and/or adapting accompanying vocals (e.g., male vocal, female vocal, mixed male-female vocal). In some examples, a user's vocal output may be processed so that the user's own voice becomes background voice of a lead instrument

In some embodiments, as indicated by block **4115,** the method may include presenting the user with musical information (e.g., lyrics, BGM options, vocal preferences). In some examples, the method may include automatically detecting when the user started singing, and initiate upon detection that the user commenced singing, the presentation of sing-along musical information at a predetermined, adaptive or dynamic pace.

In some embodiments, as indicated by block **4116,** the method may include receiving, from the user, an input relating to changing the presentation of musical information, e.g., based on subjective experience. For example, the user may alter a vocal range parameter values.

As indicated by block **4117,** musical information (e.g., performance pace, scale, BGM configuration and/or lyrics) presented to the user may be adapted in accordance with user-provided preference inputs. In some examples, the user-provided preference inputs may be taken into consideration in combination with system-determined user-preferences. For example, user provided parameter values relating to user preferences, and system generated parameter values may be weighted to arrive at combined parameter values relating to a system configuration preferences. Weighting factors may be predetermined, or may be set adaptively, e.g., based on the user's performance, system-determined preferences, user-provided preferences, and/or crowd-sourced preferences.

In some embodiments, as indicated by block **4117,** the method may include adapting or changing vocal range, BGM, for example, to match a new user vocal range. The change can be similar to the initial setup described with respect to block **4108.**

In some embodiments, musical information presented to the user may be modulated on-the-fly as the user sings-along the presented musical information. For example, BGM played for a song in a first scale may be modulated to a second scale, different from the first scale, while the user is singing, without interruption, e.g., to better match the user's vocal range.

As indicated by block **4118,** the method may include capturing vocal sound and determine characteristics in relation to the captured vocal sound.

As indicated by block **4119,** the method may include allowing the user to sing along musical information such as lyrics only, devoid of any additional or accompanying, cueing, and/or corrective vocals.

As indicated by block **4120,** the method may include removing other musical information, in addition to the removal accompanying recorded and/or synthetic vocals.

As indicated by block **4122,** the method may include, based on the determining of characteristics in relation to the captured vocal sound (block **4118**), for example, determining whether the user is having problems to sing the song (e.g., by determining a rate and/or extent of deviations of performed pitches with respect to desired pitches, a rate and/or extent in uttering lyrics with respect to desired utterances, and/or a rate and/or extent of deviations in pace with respect to a desired pace). In some embodiments, the method may include providing the user with complementary instructions aimed at helping the user to improve his/her singing performance. Such complementary instructions may relate, for example, instructions to sing louder, instructions to sing less loud, instructions to sing fewer or more vowels and/or consonants, slowing the pace (BPM) of the song, adapting vocal range, instructions regarding the selection of a vocal register, indications as to whether a pitch of the user is too low or too high with respect to a musical notation.

As indicated by block **4125,** the method may include augmenting the user's experience by providing complementary feedback while the singer is singing. Such complementary feedback can include, for example, presenting an (increased) applauding sound, crowd cheering sound, change in displayed stage lighting, and/or the like. Such complementary feedback may be provided if at least one complementary feedback criterion is met. The at least one complementary feedback criterion may be met, for example, if the user sings correctly for long time, the location in the song may be considered to relate to a climax, or end of the song. In some examples, the complementary feedback criterion may be provided at predetermined timings of each song, for example, to encourage the user to continue practicing.

As indicated by block **4123,** the method may include determining whether a song has ended or not. If the song has ended, system configurations may be updated based on the user's singing performance.

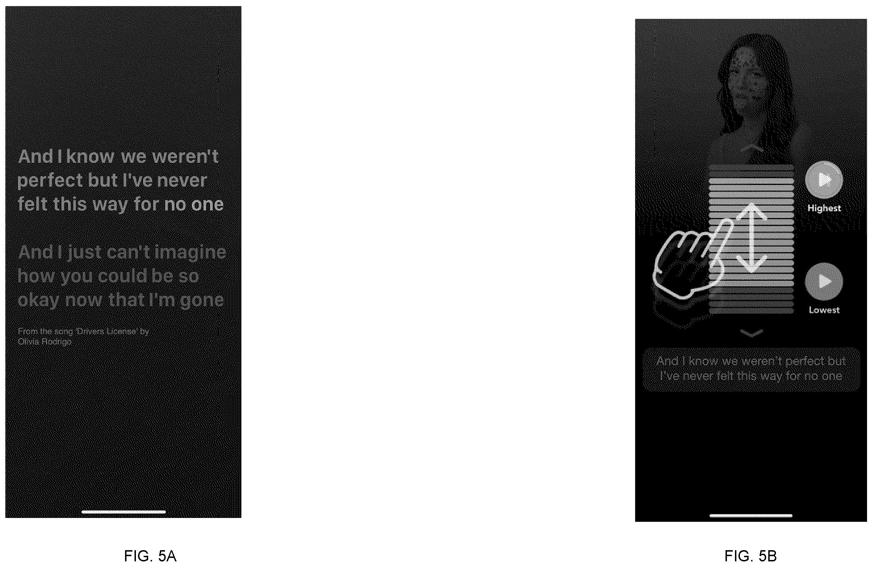

Additional reference is made to **FIG. 5A. FIG. 5A** shows a screenshot of text presented to the user by a display device of the system for determining, based on captured sound of the text read aloud by a user, a fundamental frequency of the user's voice, according to some embodiments.

Further reference is made to **FIG. 5B. FIG. 5B** shows a screenshot of a Graphical User Interface (e.g., sliding scale) that is actionably engageable by a user allowing the user to provide the system with an input relating to the user's vocal range, according to some embodiments.

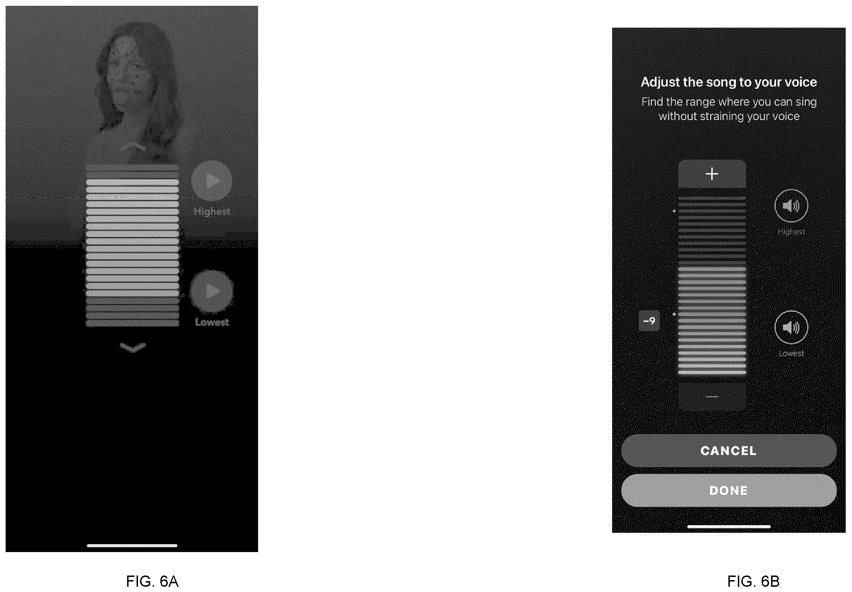

**FIG. 6A** shows a screenshot of a Graphical User Interface (e.g., sliding scale) of a vocal range indication based on captured vocal sound, according to some embodiments. The vocal range indication may be automatically adjusted by the system, based on vocal sound captured by the system.

Additional reference is made to **FIG. 6B. FIG. 6B** shows a screenshot of a Graphical User Interface actionably engageable by a user for adjusting the vocal range without requiring capturing a vocal sound, according to some embodiments. For example, the user may actionably engage a touchscreen interface for selecting a vocal range.

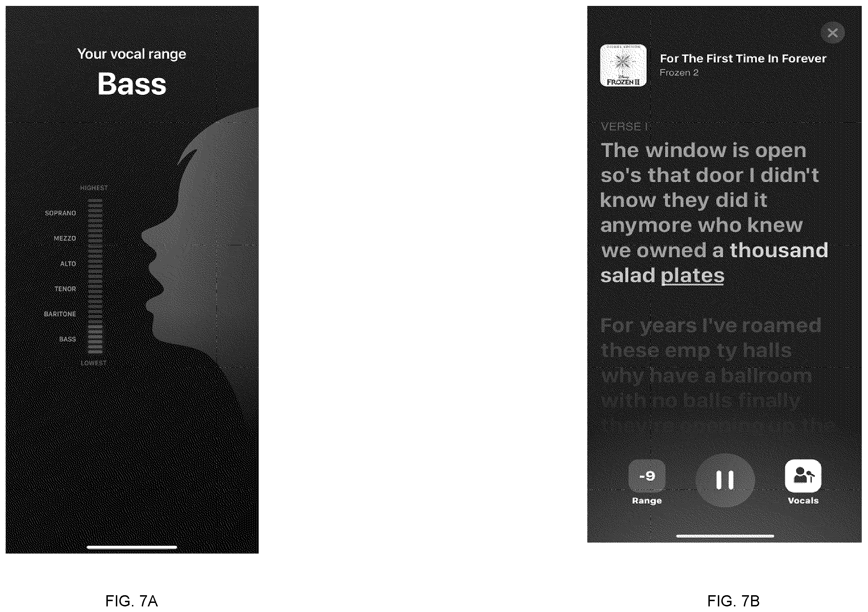

Additional reference is made to **FIG. 7A. FIG. 7A** shows a screenshot of a graphical user interface (e.g., of a scale) displaying the user's vocal range, according to some embodiments.

Further reference is made to **FIG. 7B. FIG. 7B** shows a screenshot of displayed lyrics using different glyph fonts to assist the user in singing, according to some embodiments. Underlining may for example indicate longer duration. Optionally, different colors may provide timing indication for singing a syllable. The example screen shown also features a vocals button to turn on or off the display of lyrics, and a vocal range adjustment button for adjusting vocal range "on-the-fly".

### Additional Examples:

Example 1 includes a method for providing a singing learning session to a user. The method may include:
receiving an audio signal relating to vocal sounds produced by a user;
determining, based on the received audio signal, a vocal range estimate for the user; and
presenting the user with musical information in accordance with the determined vocal range estimate.

Example 2 includes the subject matter of Example 1 and, optionally, wherein the musical information includes at least one of the following: musical notations, background music, symbols descriptive of the vowels and/or consonants to be sung by the user.

Example 3 includes the subject matter of example 1 and/or example 2 and, optionally, determining a level of correspondence estimate between data descriptive of received audio signal relating to captured vocal sounds, and data descriptive of desired vocal sounds.

Example 4 includes the subject matter of any one or more of the examples 1 to 3 and, optionally, determining, based on the determined level of correspondence estimate, whether musical information presented to the user is to be updated or not.

Example 5 pertains to a system configured to provide a singing learning session to a user, comprising at least one memory storing data and software code instructions; and at least one processor configured to execute computer code instructions stored in the at least one memory for performing the steps of any one or more of the preceding examples 1 to 4.

Example 6 pertains to a system for providing a singing learning session to a user, the system comprising:
at least one processor; and
at least one memory configured to store data and software code portions executable by the at least one processor to allow the execution of the following:
presenting the user with first musical information in accordance with a vocal range estimate;
receiving a first audio signal relating to vocal sounds produced by a user in accordance with the presented first musical information of a first musical piece, the vocal sounds being characterized by one or more vocal performance characteristics;
determining a level of correspondence estimate between data descriptive of the received first audio signal, and data descriptive of desired vocal sounds in correspondence with the presented first musical information;
determining, based on the determined level of correspondence estimate, whether the first musical information presented to the user is to be updated or not; and
in the event a determined level of correspondence drops below a low threshold value for one or more vocal performance characteristics, or exceeds high threshold value for one or more vocal performance characteristics:
updating, while the user produces vocal sounds to perform the first musical piece, the first musical information to second musical information of the first musical piece to allow the user to continuously perform the first musical piece.

Example 7 includes the subject matter of Example 6 and, optionally, wherein the updating includes decreasing complexity of the first musical notation to obtain the second musical notation at decreased complexity, in the event the determined level of correspondence drops below the low-threshold value for one or more vocal performance characteristics.

Example 8 includes the subject matter of Examples 6 and/or 7 and, optionally, wherein the updating includes increasing complexity of the first musical notation to obtain the second musical notation at increased complexity, in the event the determined level of correspondence exceeds the high-threshold value for one or more vocal performance characteristics,
wherein the increasing of the complexity includes, for example, presenting the user with incomplete or partial musical information comprising missing parts to facilitate memorizing the missing parts in relation to the incomplete musical information.

Example 9 includes the subject matter of any one or more of the Examples 6 to 8 and, optionally, wherein the vocal characteristic pertains to at least one of the following:
the accuracy of a pitch produced by the user with respect to a presented note of the first musical notation; utterance of certain vowels; utterance of consonants; utterance of syllables, utterance of words; verbal utterance; non-verbal utterance; breathing characteristics, phrasing-related characteristics; diction-related characteristics; singing loudness; or any combination of the aforesaid.

Example 10 includes the subject matter of any one or more of the examples 6 to 9 and, optionally, providing at least one cue about an upcoming update of the first musical information of the first musical piece to the second musical information of the first musical piece, wherein the at least one cue includes, for example, an auditory cue, a visual cue, a haptic cue, or any combination of the aforesaid.

Example 11 includes the subject matter of any one or more of the examples 6 to 10 and, optionally, wherein the updating includes at least one of the following: changing a first key of the remaining first musical notation to be performed by the user into a second key that is different than the first key, changing an octave of one or more notes, or both.

Example 12 includes the subject matter of any one or more of the examples 6 to 11 and, optionally, system of claim 1, wherein the updating includes: discarding one or more musical notes of the remaining first musical notation to be performed by the user so that the remaining notes are within a narrower vocal range.

Example 13 includes the subject matter of any one or more of the examples 6 to 12 and, optionally, wherein the system is further configured to determine a current posture of the user, and to provide feedback to the user if the current posture deviates from a desired posture during singing.

Example 14 includes the subject matter of any one or more of the examples 6 to 13 and, optionally, at least one sensor configured to sense one or more physiological parameter values of the user for:
determining: a stress level of the user, strain in the voice of the user, or both; and
provide the user with corresponding feedback if the determined level of stress exceeds a stress-related threshold value and/or a voice strain-related threshold value, wherein the at least one sensor is for example configured to sense at least one of the of the following parameter values: pulse, body temperature, user posture, user movement, user motion, blood pressure, sweat rate, facial expressions, or any combination of the aforesaid.

Example 15 includes the subject matter of any one or more of the examples 6 to 14 and, optionally, wherein the at least one sensor is configured to sense one or more physiological parameter values of the user for:
determining: a stress level of the user, strain in the voice of the user, or both; and
if the determined level of stress exceeds a stress-related threshold value and/or a voice strain-related threshold value, updating the first musical information to second musical information such to reduce stress of the user and/or vocal strain. The at least one sensor is for example configured to sense at least one of the of the following parameter values: pulse, body temperature, user posture, user movement, user motion, blood pressure, sweat rate, facial expressions, or any combination of the aforesaid.

Example 16 includes the subject matter of any one or more of the examples 6 to 15 and, optionally, wherein the system is configured to prioritize feedback which is provided to the user to the vocal sounds, based on a magnitude of a deviation of a vocal characteristic of the vocal sounds from a desired vocal characteristic, wherein prioritization of the feedback is performed automatically, semi-automatically, manually (e.g., user-configurable), or any of the aforesaid.

Example 17 includes the subject matter of any one or more of the examples 6 and 16 and, optionally, wherein the system is configured to determine the level of correspondence for a plurality of users jointly performing a musical piece.

Example 18 pertains to method for providing a singing learning session to a user, the method comprising:
presenting the user with first musical information in accordance with a vocal range estimate;
receiving a first audio signal relating to vocal sounds produced by a user in accordance with the presented first musical information of a first musical piece, the vocal sounds being characterized by one or more vocal performance characteristics;
determining a level of correspondence estimate between data descriptive of the received first audio signal, and data descriptive of desired vocal sounds in correspondence with the presented first musical information;
determining, based on the determined level of correspondence estimate, whether the first musical information presented to the user is to be updated or not; and
in the event a determined level of correspondence drops below a low threshold value for one or more vocal performance characteristics, or exceeds high threshold value for one or more vocal performance characteristics:
updating, while the user produces vocal sounds to perform the first musical piece, the first musical information to second musical information of the first musical piece to allow the user to continuously perform the first musical piece.

Example 19 includes the subject matter of example 18 and, optionally, wherein the updating includes decreasing complexity of the first musical notation to obtain the second musical notation at decreased complexity, in the event the determined level of correspondence drops below the low-threshold value for one or more vocal performance characteristics, and/or
wherein the updating includes increasing complexity of the first musical notation to obtain the second musical notation at increased complexity, in the event the determined level of correspondence exceeds the high-threshold value for one or more vocal performance characteristics.

Example 20 includes the subject matter of any one or more of the examples 18 and/or 19 and, optionally, wherein the increasing of the complexity includes presenting the user with incomplete or partial musical information comprising missing parts to facilitate memorizing the missing parts in relation to the incomplete musical information.

The various features and steps discussed above, as well as other known equivalents for each such feature or step, can be mixed and matched by one of ordinary skill in this art to perform methods in accordance with principles described herein. Although the disclosure has been provided in the context of certain embodiments and examples, it will be understood by those skilled in the art that the disclosure extends beyond the specifically described embodiments to other alternative embodiments and/or uses and obvious modifications and equivalents thereof. Accordingly, the disclosure is not intended to be limited by the specific disclosures of embodiments herein.

Any digital computer system, module and/or engine exemplified herein can be configured or otherwise programmed to implement a method disclosed herein, and to the extent that the system, module and/or engine is configured to implement such a method, it is within the scope and spirit of the disclosure. Once the system, module and/or engine are programmed to perform particular functions pursuant to computer readable and executable instructions from program software that implements a method disclosed herein, it in effect becomes a special purpose computer particular to embodiments of the method disclosed herein. The methods and/or processes disclosed herein may be implemented as a computer program product that may be tangibly embodied in an information carrier including, for example, in a non-transitory tangible computer-readable and/or non-transitory tangible machine-readable storage device. The computer program product may directly loadable into an internal memory of a digital computer, comprising software code portions for performing the methods and/or processes as disclosed herein. The term "non-transitory" is used to exclude transitory, propagating signals, but to otherwise include any volatile or non-volatile computer memory technology suitable to the application.

Additionally, or alternatively, the methods and/or processes disclosed herein may be implemented as a computer program that may be intangibly embodied by a computer readable signal medium. A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a non-transitory computer or machine-readable storage device and that can communicate, propagate, or transport a program for use by or in connection with apparatuses, systems, platforms, methods, operations and/or processes discussed herein.

The terms "non-transitory computer-readable storage device" and "non-transitory machine-readable storage device" encompasses distribution media, intermediate storage media, execution memory of a computer, and any other medium or device capable of storing for later reading by a computer program implementing embodiments of a method disclosed herein. A computer program product can be deployed to be executed on one computer or on multiple computers at one site or distributed across multiple sites and interconnected by one or more communication networks.

These computer readable and executable instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable and executable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable and executable instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

In the discussion, unless otherwise stated, adjectives such as "substantially" and "about" that modify a condition or relationship characteristic of a feature or features of an embodiment of the invention, are to be understood to mean that the condition or characteristic is defined to within tolerances that are acceptable for operation of the embodiment for an application for which it is intended.

Unless otherwise specified, the terms 'about' and/or 'close' with respect to a magnitude or a numerical value may imply to be within an inclusive range of -10% to +10% of the respective magnitude or value.

It should be noted that where an embodiment refers to a condition of "above a threshold", this should not be construed as excluding an embodiment referring to a condition of "equal or above a threshold". Analogously, where an embodiment refers to a condition "below a threshold", this should not to be construed as excluding an embodiment referring to a condition "equal or below a threshold". It is clear that should a condition be interpreted as being fulfilled if the value of a given parameter is above a threshold, then the same condition is considered as not being fulfilled if the value of the given parameter is equal or below the given threshold. Conversely, should a condition be interpreted as being fulfilled if the value of a given parameter is equal or above a threshold, then the same condition is considered as not being fulfilled if the value of the given parameter is below (and only below) the given threshold.

It should be understood that where the claims or specification refer to "a" or "an" element and/or feature, such reference is not to be construed as there being only one of that element. Hence, reference to "an element" or "at least one element" for instance may also encompass "one or more elements".

As used herein the term "configuring" and/or 'adapting' for an objective, or a variation thereof, implies using materials and/or components in a manner designed for and/or implemented and/or operable or operative to achieve the objective.

Unless otherwise stated or applicable, the use of the expression "and/or" between the last two members of a list of options for selection indicates that a selection of one or more of the listed options is appropriate and may be made, and may be used interchangeably with the expressions "at least one of the following", "any one of the following" or "one or more of the following", followed by a listing of the various options.

As used herein, the phrase "A,B,C, or any combination of the aforesaid" should be interpreted as meaning all of the following: (i) A or B or C or any combination of A, B, and C, (ii) at least one of A, B, and C; and (iii) A, and/or B and/or C. This concept is illustrated for three elements (i.e., A,B,C), but extends to fewer and greater numbers of elements (e.g., A, B, C, D, etc.).

It is noted that the terms "operable to" or "operative to" can encompass the meaning of the term "adapted or configured to". In other words, a machine "operable to" or "operative to" perform a task can in some embodiments, embrace a mere capability (e.g., "adapted") to perform the function and, in some other embodiments, a machine that is actually made (e.g., "configured") to perform the function.

The term "threshold" used herein may pertain to static thresholds, dynamic thresholds or adaptive thresholds. Static thresholds are predetermined thresholds that remain constant. Dynamic thresholds are forcefully changed, for example, at a certain time of day, or a certain day of the year. Adaptive thresholds are changed in response to changes in characteristics of, for example, captured sounds and/or audio signals and/or MIDI signals, physiological characteristics of a user, environmental characteristics, and/or in the network, and may vary depending on a variety of parameters.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 4, from 1 to 4, from 1 to 5, from 2 to 4, from 2 to 6, from 4 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It should be appreciated that combination of features disclosed in different embodiments are also included within the scope of the present inventions.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A system for providing a singing learning session to a user, the system comprising:
at least one processor; and
at least one memory configured to store data and software code portions executable by the at least one processor to allow the execution of the following:
presenting the user with first musical information;
receiving a first audio signal relating to vocal sounds produced by a user, the vocal sounds being **characterized by** one or more vocal performance characteristics;
determining, based on the one or more vocal performance characteristics, whether the first musical information presented to the user is to be updated or not; and
in the event that the system determines that the first musical information presented to the user is to be updated, the system further performs:
providing advance information about upcoming changes in the musical information.

2. The system of claim 1, configured to provide feedback, based on the one or more vocal performance characteristics, wherein the one or more vocal performance characteristics include, for example, the accuracy of a pitch produced by the user with respect to a presented note of the first musical notation; utterance of certain vowels; utterance of consonants; utterance of syllables, utterance of words; verbal utterance; non-verbal utterance; breathing characteristics, phrasing-related characteristics; diction-related characteristics; singing loudness; or any combination of the aforesaid.

3. The system of claim 1 and/or claim 2, configured to adapt presentation of at least one first characteristic relating to musical notation at higher first characteristic complexity relative to an initial first characteristic complexity, and
providing feedback that includes presenting at least one second characteristic that is different from the first characteristic at a lower second characteristic complexity level relative to the initial second characteristic complexity level.

4. The system of any one or more of the preceding claims, configured to provide, based on the one or more vocal performance characteristics, feedback comprising personalized warm-up exercises.

5. The system of any one or more of the preceding claims, configured to take into consideration environmental, physiological characteristics and/or the user's posture and/or movement, for providing feedback on the user's performance characteristics.

6. The system of any one or more of the preceding claims, providing feedback comprising at least one cue about an upcoming update of the first musical information of the first musical piece to the second musical information of the first musical piece, wherein the at least one cue includes, for example, an auditory cue, a visual cue, a haptic cue, or any combination of the aforesaid.

7. The system of any one or more of the preceding claims, wherein the advance information pertains to at least one of the following:
changing a first key of the remaining first musical notation to be performed by the user into a second key that is different than the first key,
changing an octave of one or more notes, or both.

8. The system of any one or more of the preceding claims, wherein the advance information pertains to:
discarding one or more musical notes of the remaining first musical notation to be performed by the user so that the remaining notes are within a narrower vocal range.

9. The system of any one or more of the preceding claims, further configured to determine a current posture of the user, and to provide feedback to the user if the current posture deviates from a desired posture during singing.

10. The system of any one or more of the preceding claims, further comprising at least one sensor configured to sense one or more physiological parameter values of the user for:
determining: a stress level of the user, strain in the voice of the user, or both; and
provide the user with corresponding feedback if the determined level of stress exceeds a stress-related threshold value and/or a voice strain-related threshold value
wherein the at least one sensor is for example configured to sense at least one of the of the following parameter values:
pulse, body temperature, user posture, user movement, user motion, blood pressure, sweat rate, facial expressions, or any combination of the aforesaid.

11. The system of any one or more of the preceding claims, further comprising at least one sensor configured to sense one or more physiological parameter values of the user for:
determining: a stress level of the user, strain in the voice of the user, or both; and
if the determined level of stress exceeds a stress-related threshold value and/or a voice strain-related threshold value, updating the first musical information to second musical information such to reduce stress of the user and/or vocal strain.
wherein the at least one sensor is for example configured to sense at least one of the of the following parameter values:
pulse, body temperature, user posture, user movement, user motion, blood pressure, sweat rate, facial expressions, or any combination of the aforesaid.

12. The system of any one or more of the preceding claims, further configured to prioritize feedback which is to be provided to the user to the vocal sounds, based on a magnitude of a deviation of a vocal characteristic of the vocal sounds from a desired vocal characteristic,
wherein prioritization of the feedback is performed automatically, or user-configurable, or both.

13. The system of any one or more of the preceding claims, configured to determine the level of correspondence for a plurality of users jointly performing a musical piece and, for example, providing individual and/or collective feedback on the jointly performed musical piece.

14. The system of any one or more of the preceding claims, configured to detect attempts of associating different users to a same user profile.

15. A computer-implemented method for providing a singing learning session to a user, the method comprising:
presenting the user with first musical information in accordance with a vocal range estimate;
receiving a first audio signal relating to vocal sounds produced by a user in accordance with the presented first musical information of a first musical piece, the vocal sounds being **characterized by** one or more vocal performance characteristics;
presenting the user with first musical information;
receiving a first audio signal relating to vocal sounds produced by a user, the vocal sounds being **characterized by** one or more vocal performance characteristics;
determining, based on the one or more vocal performance characteristics, whether the first musical information presented to the user is to be updated or not; and
in the event that the system determines that the first musical information presented to the user is to be updated, the system further performs:
presenting advance information about upcoming changes in the musical information.
